(19) Europäisches Patentamt
European Patent Office
Office européen des brevets

(11) **EP 2 816 854 B1**

(12) **EUROPEAN PATENT SPECIFICATION**

(45) Date of publication and mention of the grant of the patent:
**24.08.2016   Bulletin 2016/34**

(51) Int Cl.:
*H04W 72/12* [(2009.01)]      *H04W 16/12* [(2009.01)]
*H04W 16/30* [(2009.01)]

(21) Application number: **13305844.6**

(22) Date of filing: **21.06.2013**

(54) **Load balancing between antennas and scheduling to improve throughput of cell edge users**

Lastausgleich zwischen Antennen und Plannung zur Verbesserung des Durchsatzes der Zellerbandbenutzer

Equilibrage de charge entre antennes et ordonnancement pour l'amélioration du débit des utilisateurs en bord de cellule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.12.2014   Bulletin 2014/52**

(73) Proprietor: **ALCATEL LUCENT
92100 Boulogne-Billancourt (FR)**

(72) Inventors:
• **Claussen, Holger
Dublin, 15 (IE)**
• **Lopez-Perez, David
Dublin, 15 (IE)**

(74) Representative: **Berthier, Karine
Alcatel-Lucent International
148/152, route de la Reine
92100 Boulogne-Billancourt (FR)**

(56) References cited:
**EP-A2- 0 531 090          WO-A1-2006/012537
US-A1- 2012 208 581**

• **SERGEY MOISEEV ET AL: "WLC17-4: Load-Balancing QoS-Guaranteed Handover in the IEEE 802.16e OFDMA Network", GLOBAL TELECOMMUNICATIONS CONFERENCE, 2006. GLOBECOM '06. IEEE, IEEE, PI, 1 November 2006 (2006-11-01), pages 1-5, XP031075714, ISBN: 978-1-4244-0356-1**
• **HOLGER CLAUSSEN ET AL: "Multi-carrier cell structures with angular offset", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 1179-1184, XP032272716, DOI: 10.1109/PIMRC.2012.6362524 ISBN: 978-1-4673-2566-0**

**Description**

FIELD OF THE INVENTION

The invention relates to a method of scheduling resource across a region of available radio spectrum to user equipment in a cell supported by a base station of a wireless communication network, a computer program product and scheduling control unit operable to perform the method. The base station is configured to support communication with user equipment in the cell using a first portion of the region of available radio spectrum using a first antenna or a second portion of the region of available radio spectrum using a second antenna.

BACKGROUND

Wireless telecommunication systems are known. In such systems, mobile communication devices, for example, mobile telephones, are operable to communicate with base stations provided by network providers.

In known wireless telecommunication systems, radio coverage is provided to network connectable devices according to areas known as cells. Abase station is located in each cell to provide radio coverage. Typically, user devices in each cell are operable to receive information and data from a base station and to transmit information and data to a base station.

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

One feature of cellular networks is uneven distribution of signal to interference and noise ratio (SINR) within a cell. Such an uneven distribution of signal to interference and noise ratio can, for example, lead to very high data rates in the centre of a cell where SINR is good, but very poor data rates at the cell edge.

It is desired to provide an improved wireless communication network.

WO2006/012537 A1 discloses an algorithm for restrictive reuse set management to provide an equal grade of service on a forward link transmission. The algorithm is an iterative algorithm designed to maximize the sector throughput under the constraint of equal user throughput over all reuse sets. The overall available bandwidth is divided into seven spectrum fragments, each one with a different frequency reuse factor. Users are initially allocated to the spectrum frequency with frequency reuse factor 1, and then those users with the worst spectral efficiency are moved to a different spectrum fragment where they benefit from interference mitigation. The algorithm stops when it is impossible to achieve any throughput improvement by moving a user from one spectrum fragment to another.

SUMMARY

Accordingly, a first aspect provides a method of scheduling resource across a region of available radio spectrum to a user equipment in a cell supported by a base station of a wireless communication network, said base station being configured to support communication with said user equipment in said cell using a first portion of said region of available radio spectrum using a first antenna or a second portion of said region of available radio spectrum using a second antenna; said method comprising: receiving an indication of signal to interference and noise ratio experienced at each user equipment in the first and second portion of the region of available radio spectrum; creating an initial association with one of said first or second portion of said region of available radio spectrum for each user equipment based on said received indication; identifying a worst user of each portion of radio spectrum based on said initial association and said signal to interference and noise ratio; estimating a throughput associated with each said worst user based on said initial association; calculating how many users should be associated with each of said first portion and said second portion of said region of available radio spectrum based on said estimated throughput associated with each said worst user such that throughput of a worst user associated with said first portion of said region of available radio spectrum is substantially equivalent to throughput of a worst user associated with said second portion of said region of available radio spectrum; and adjusting said initial association in accordance with said calculation; and scheduling resource to said user equipment in said first or second portion of said region of available radio spectrum in accordance with said adjusted association.

The first aspect recognises that one issue in cellular networks is an uneven distribution of signal to interference and noise ratio across a cell. Cells are supported by base stations in a manner which leads to very high data rates being achievable in a cell centre, but very poor data rates achievable in a cell edge.

LTE network architecture can address uneven distribution of signal to interference and noise ratio to some extent by employing interference coordination techniques. According to such techniques, parts of available sub-carriers are reserved for edge users and thus those edge users have increased signal to interference and noise ratios. Such an arrangement may, however, result in a decrease in overall frequency reuse within a cell and result in a sacrifice in overall cell capacity to improve cell edge capacity.

Aspects described herein recognise that if, for example, non-overlapping portions of radio frequency band are available at a base station, an alternative cell configuration may be implemented which, in combination with appropriate resource scheduling and load balancing techniques, may significantly improve cell edge data throughput. Aspects and embodiments may operate in a manner that allows for an increase in both overall cell capacity and cell edge capacity without needing to specifically reserve a part of available radio spectrum for cell edge users.

The base station may be operable to support a cell (or sector) using a plurality of antennas. The cell, or sector, may be seen by user equipment as a single cell or sector, despite being supported by at least two antenna provided at a base station for this cell or sector. That is to say, no handover is required between the first and second regions of available radio spectrum as a user moves within the cell or sector supported by the first and second antenna of the base station for this cell or sector.

In one embodiment, the method comprises: transmitting the same cell-specific reference symbol in both of the first portion of the region of available radio spectrum using a first antenna and the second portion of the region of available radio spectrum using a second antenna. That is to say, the same common reference signal (CRS) is transmitted in both the first and second portion. According to such a cell configuration in, for example, an LTE network, an LTE subframe is divided into two fragments in the frequency domain because if it is the same CRS, it is the same symbol to subcarrier mapping. The first antenna and second antenna may use the same CRS in both portions or regions of available spectrum so that both antennas appear form the same sector or cell to user equipment (UEs). Thus handovers between offset antennas of the same base station , for example, eNodeB, sector or cell can be avoided.

In one embodiment, the method comprises: configuring the second antenna with respect to said antenna to support a second region of radio coverage within the cell which is offset to a first region of radio coverage supported by the first antenna. In one embodiment, the method comprises: configuring the first and second antenna to support respective regions of radio coverage which are horizontally offset with respect to each other. In one embodiment, the method comprises: configuring the first and second antenna to support respective regions of radio coverage which are vertically offset with respect to each other. Accordingly, various cell configurations may be implemented by base stations provided within a network. Such configurations include horizontal sector offset configurations, vertical sector offset configurations and horizontal and vertical sector offset configurations. Some of those configurations are described in more detail below. Such configurations may be such that cell edge areas which previously suffered from high inter-cell interference may not suffer such interference anymore, and cell edge performance and/or spectral reuse within a network can be enhanced.

Further configurations in which the physical geographic regions of radio coverage supported by a first and second antenna are not completely coincident can be envisaged, and a method according to the first aspect maybe of use in such configurations to balance load between two or more antenna operable to support one "cell" or "sector" of a network supported by a base station.

Aspects and embodiments allow for a load balancing scheme, which targets balancing of the load between two or more antennas in the same sector. Load balancing according to some aspects and embodiments target roughly achieving the same throughput performance for the worst users associated with each antenna. Since the multiple antenna are operable to appear as the same cell, for example, by transmitting the same CRS, the load balancing technique is not based on classic CRS power tuning, but leverages perceived user signal qualities.

In one embodiment, the method comprises: determining said first portion of said region of available radio spectrum to be used by said first antenna and determining said second portion of said region of available radio spectrum to be used by said second antenna. The portion of available radio spectrum allocated to each of said first and second antenna may itself be configured, for example, by the network. The method of the first aspect may operate within a preset portion allocation performed by a network. For example, one implementation of a multi-antenna configuration is such that an LTE subframe is split into two fragments in the frequency domain. For example, if there are R available resource blocks (RBs), a first spectrum fragment (portion) may contain a first R/2 RBs, while a second spectrum fragment (portion) may contain the remaining R/2 RBs.

In some aspects, such as those implemented in an LTE network, several further constraints may be of relevance to a radio resource allocation problem. For instance, typically an LTE network requires that multiple RBs allocated to the same user are assigned with the same modulation and coding scheme (MCS). According to antenna configurations such as those described above and below, schedulers, for example, round robin and proportional schedulers, maybe operable to allocate a user RBs handled by different antennas that may have very different channel conditions due to the different orientation/tilt of those antennas. Since the signal quality in one of the antennas maybe significantly lower than in other, the scheduling arrangement can compromise the MCS selection and severely affect user performance. Some aspects and embodiments can provide a scheduling technique that serves users with RBs handled to realize load balancing decisions between multiple antennas.

Accordingly, in order to enhance cell edge performance in a network, aspects and embodiments described may be implemented to offload users from a more loaded antenna to the less loaded antenna serving a cell such that the worst users served by each antenna roughly achieve the same throughput performance. It will be appreciated that when the number of scheduling realizations is sufficiently large, the performance of a proportional fair scheduler tends to be equivalent to that of a round robin scheduler. Thus it is possible to assume a round robin scheduler in calculations, which thus gives a long-term perspective and the possibility of making fast calculations that can be updated regularly.

In one embodiment, the adjusting comprises: adjusting by moving user equipment associated with one antenna which have the highest reported signal to noise and interference ratio associated with another antenna to be associated with that other antenna. Accordingly, a base station, for example, eNodeB, may be operable to move users from a second antenna user queue (source) to a first antenna user queue (destination) or vice versa, until the number of desired users in each antenna is achieved. The base station may operate such that it first moves users which have, for example, the highest average user SINR in the destination antenna. If a base station moves one user from one queue to the other, and this user becomes the worst user in the new queue, then the base station may be operable to re-compute how many users there should be associated with each antenna before continuing. The algorithm may stop when the number of desired users per antenna is achieved, as indicated earlier, or when a base station begins to operate to start moving users from a second antenna to the first antenna, when in the previous iteration it was moving users in the opposite direction.

In an LTE network, scheduling decisions are typically taken every subframe. In a traditional scheduler, a time domain scheduler is operable to select S users for scheduling and then pass them on to a frequency domain scheduler, which is operable to determine a RB to user mapping. Limiting the number of users with a time domain scheduler helps to control signaling overhead and the complexity of the frequency domain scheduler. Different polices maybe used in each of the time and frequency domain schedulers to decide which users are scheduled and in which RBs.

According to a round robin scheduler, a user is selected every subframe, i.e., $S=1$ in a round robin manner, and the selected user is scheduled across all RBs. Round robin scheduling does not benefit from multi-user diversity.

In a proportional fair scheduler, various metrics may be used in the time and frequency domain schedulers in order to take advantage of multi-user diversity while also providing fairness among users.

In one embodiment, scheduling resource comprises: maintaining two independent scheduling chains, one for each of the first and second antenna, based on the user equipment association. According to some embodiments, it may be provided that there are two independent scheduling chains within each eNodeB sector, one of them associated with, for example, a higher downtilt antenna and the other with a 'normal' antenna. Each scheduling chain is operable to take users from different antenna user queues as provided or delineated by a load balancing scheme such as the one described above. In such a scenario each scheduling chain is operable to manage the RBs associated with that antenna. For example, a higher downtilt antenna scheduling chain is operable to take users for time and frequency domain scheduling from a higher downtilt antenna user queue $U^{H} = \{U_1^H, ... U_n^H ... U_{N^{h'}}^H\}$ and operate over, e.g., the first R/2 RBs. Meanwhile, a scheduling chain associated with a lower downtilt antenna may be operable to take users for time and frequency domain scheduling from the lower downtilt antenna user queue $U^{L} = \{U_1^L, ... U_n^L ... U_{Nl'}^L\}$ and operate over a remaining R/2 RBs.

In one embodiment, scheduling resource comprises: maintaining a single scheduling chain and scheduling user equipment associated with each of the first and second antenna such that user equipment associated with the first portion of the region of available radio spectrum must be scheduled in that portion and user equipment associated with the second portion of the region of available radio spectrum must be scheduled in that portion. According to some embodiments, there may be only one scheduling chain, over which the time domain scheduler decides which S users that are passed to the frequency domain scheduler. In a round robin case, it is required that $S=2$ and according to one embodiment, the time domain scheduler is operable to take one user from the higher downtilt user queue and one user from the normal antenna user queue. In a proportional fair case, it is required that $S>2$ and that the time domain scheduler is operable to take users from both the higher downtilt and the normal antenna queue. According to some embodiments the frequency domain scheduler then acts, according to some embodiments, in accordance with the following constraint: A user that has been classified by a load balancing scheme as described above as a higher downtilt antenna user cannot be scheduled in the RBs associated to the lower downtilt antenna and vice versa.

Both scheduling techniques operate to ensure that load balancing decisions can be implemented, and that users are only allocated to the RBs handled by their intended antenna.

According to one embodiment, adjusting said association is performed such that throughput of an average user associated with the first portion of the region of available radio spectrum is substantially equivalent to throughput of an average user associated with the second portion of the region of available radio spectrum.

According to one embodiment, adjusting said association is performed such that throughput of the median user associated with the first portion of said region of available radio spectrum is substantially equivalent to throughput of the median user associated with the second portion of the region of available radio spectrum.

Accordingly, although the first aspect is presented as relating to a comparison of worst users between regions of radio spectrum, that apportioning may be performed based on an average or median user in each region, or any other appropriate comparative value, for example, the performance of the worst 5+ percentile users in each region or the worst 50 percentile users in each region may be balanced as appropriate.

A second aspect provides a computer program product operable, when executed on a computer, to perform the method of the first aspect.

A third aspect provides a scheduling control unit operable to schedule resource across a region of available radio spectrum to a user equipment in a cell supported by a base station of a wireless communication network, said base station being configured to support communication with said user equipment in said cell using a first portion of said region of available radio spectrum using a first antenna or a second portion of said region of available radio spectrum using a second antenna; said scheduling control unit comprising: reception logic operable to receive an indication of signal to interference and noise ratio experienced at each user equipment in the first and second portion of the region of available radio spectrum; association logic operable to: create an initial association with one of said first or second portion of said region of available radio spectrum for each user equipment based on said received indication; identify a worst user of each portion of radio spectrum based on said initial association and said signal to interference and noise ratio; estimate a throughput associated with each said worst user based on said initial association; calculate how many users should be associated with each of said first portion and said second portion of said region of available radio spectrum based on said estimated throughput associated with each said worst user such that throughput of a worst user associated with said first portion of said region of available radio spectrum is substantially equivalent to throughput of a worst user associated with said second portion of said region of available radio spectrum; and adjust said initial association in accordance with said calculation; and scheduling logic operable to schedule resource to said user equipment in said first or second portion of said region of available radio spectrum in accordance with said adjusted association.

In one embodiment, the scheduling control unit comprises: transmission logic operable to transmit a cell-specific reference symbol in both of the first portion of the region of available radio spectrum using a first antenna and the second portion of the region of available radio spectrum using a second antenna.

In one embodiment, the second antenna is configured with respect to the first antenna to support a second region of radio coverage within the cell which is offset to a first region of radio coverage supported by the first antenna.

In one embodiment, the first and second antenna are horizontally offset with respect to each other and configured to support respective regions of radio coverage which are offset.

In one embodiment, the first and second antenna are vertically offset with respect to each other configured to support respective regions of radio coverage which are offset.

In one embodiment, the scheduling control unit comprises: determination logic operable to determine the first portion of said region of available radio spectrum to be used by the first antenna and the second portion of the region of available radio spectrum to be used by the second antenna.

In one embodiment, the adjusting comprises: adjusting by moving user equipment associated with one antenna which have the highest reported signal to noise and interference ratio in another antenna to be associated with that other antenna.

In one embodiment, the scheduling logic is operable to maintain two independent scheduling chains, one for each of the first and second antenna, based on the user equipment association.

In one embodiment, the scheduling logic is operable to maintain a single scheduling chain and scheduling user equipment associated with each of the first and second antenna such that user equipment associated with the first portion of the region of available radio spectrum must be scheduled in that portion and user equipment associated with the second portion of the region of available radio spectrum must be scheduled in that portion.

According to one embodiment, adjusting said association is performed such that throughput of an average user associated with the first portion of the region of available radio spectrum is substantially equivalent to throughput of an average user associated with the second portion of the region of available radio spectrum.

According to one embodiment, adjusting said association is performed such that throughput of the median user associated with the first portion of said region of available radio spectrum is substantially equivalent to throughput of the median user associated with the second portion of the region of available radio spectrum.

Although aspects have been described in relation to macro base stations, it will be appreciated that a small cell base station, such as a femto, pico, or home cell base station, may also be operable to support radio coverage regions in such a manner. Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figures 1a to 1c illustrate schematically Signal to Interference and Noise ratio (SINR) distribution and spectrum coverage for a 3 sector eNodeB with and without horizontal sector offset configuration;
Figures 2a to 2c illustrate schematically Signal to Interference and Noise ratio (SINR) distribution and spectrum coverage for a 3 sector eNodeB with and without horizontal and vertical sector offset configuration;
Figures 3a and 3b illustrate schematically some features of an eNodeB configured to use horizontal sector offset configuration;
Figures 4a to 4c illustrate schematically some features of an eNodeB configured to use horizontal and vertical sector offset configuration; and
Figure 5 illustrates schematically a load balancing algorithm according to one embodiment.

DESCRIPTION OF THE EMBODIMENTS

Wireless telecommunication systems are known. In such systems, mobile communication devices, for example, mobile telephones, are operable to communicate with base stations provided by network providers.

In known wireless telecommunication systems, radio coverage is provided to network connectable devices according to areas known as cells. Abase station is located in each cell to provide radio coverage. Typically, user devices in each cell are operable to receive information and data from a base station and to transmit information and data to a base station.

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

Various cell configurations may be implemented by base stations provided within a network. Such configurations include:

Horizontal Sector offset configuration

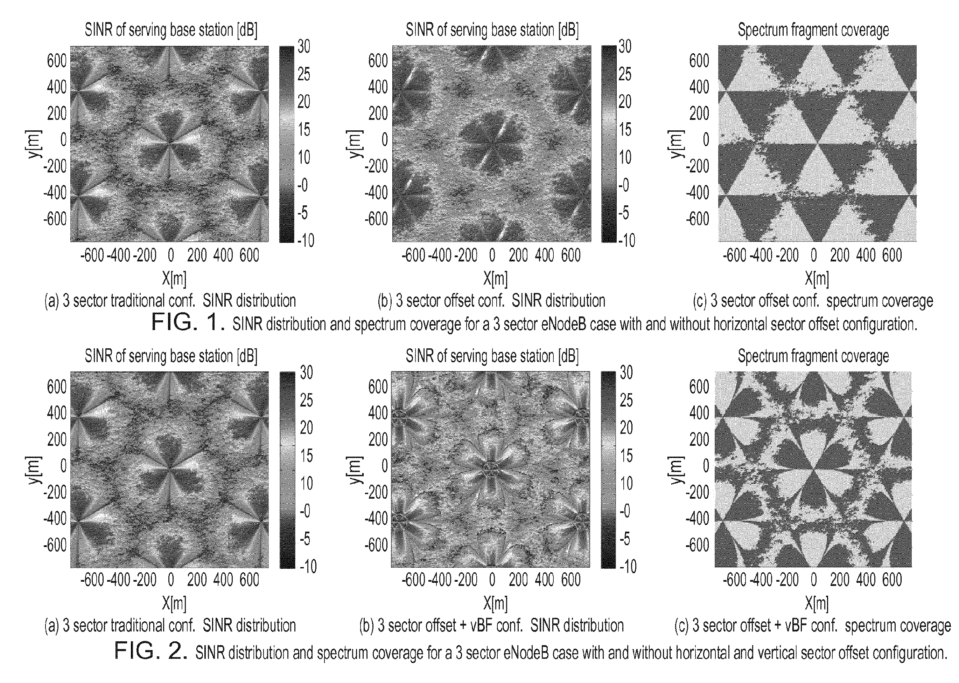

Figures 1a to 1c illustrate schematically Signal to Interference and Noise ratio (SINR) distribution and spectrum coverage for a 3 sector eNodeB with and without horizontal sector offset configuration. According to such a cell configuration in, for example, an LTE network, an LTE subframe is divided into two fragments in the frequency domain, while using the same common reference signal (CRS) in each resource block (RB). According to some implementations, each eNodeB sector can be equipped with two offset antennas such that the antenna pattern of an "additional" antenna is offset with respect to an "existing" antenna and configured such that its highest gain lobe points substantially in the direction of a sector boundary in the "existing" configuration. Each eNodeB sector offset antenna is operable to transmit a different spectrum fragment as shown, for example, in Figure 1(c). Such a configuration is such that cell edge areas which previously suffered from high inter-cell interference may not suffer such interference anymore, and cell edge performance can be enhanced. Handovers among antennas of the same eNodeB sector can be avoided.

Horizontal and Vertical Sector offset configuration

Figures 2a to 2c illustrate schematically Signal to Interference and Noise ratio (SINR) distribution and spectrum coverage for a 3 sector eNodeB with and without horizontal and vertical sector offset configuration. According to such a cell configuration, in order to further enhance spatial reuse, the horizontal sector offset configuration for LTE described above is extended in the vertical dimension. By adding an additional static beam pointing towards the same direction with higher downtilt (vertical offset) to each existing antenna in a horizontal sector offset cell, that static beam being configured to operate on the complementing spectrum fragment, an arrangement having both horizontal and vertical offset may be realised. Each existing antenna and its new downtilt antenna are considered to belong to the same network base station sector, use the whole bandwidth, and transmit the same CRS in each resource block (RB). Meanwhile, neighbouring horizontal offset antennas and the new downtilt antenna are considered to belong to a different base station sector and are operable to reuse the whole bandwidth. Spectrum reuse across sectors is configured such that neighbouring antennas do not transmit over the same spectrum fragment (see Figure 2(c)). The addition of a higher downtilt beam improves spatial reuse and significantly enhances network performance.

## Horizontal Offset Configuration

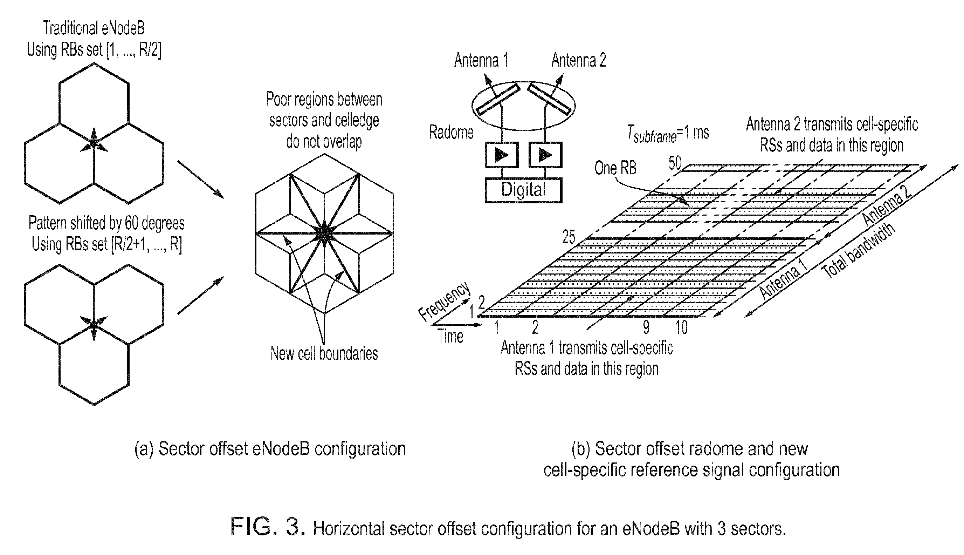

Figures 3a and 3b illustrate schematically features of an eNodeB configured to use horizontal sector offset configuration. As described above, implementation of such a configuration is such that an LTE subframe is split into two fragments in the frequency domain. For example, if there are R available resource blocks (RBs), a first spectrum fragment may contain a first R/2 RBs, while a second spectrum fragment may contain the remaining R/2 RBs (see Fig. 3(b)). Each eNodeB sector is equipped with an offset antenna configured such that the antenna pattern of the 'new' antenna is offset with respect to the normal antenna so that its highest gain points in the direction of the sector boundary in a "normal" eNodeB antenna configuration. For tri-sectored eNodeBs, the offset is 60 degrees (see Fig. 3(a)).

According to a horizontal sector offset configuration in each eNodeB sector an offset antenna transmits a different spectrum fragment to the normal antenna. There is no interference among neighbouring antennas, as shown in Fig. 1(c). The normal antenna and offset antenna use the same reference symbol to subcarrier mapping in both spectrum fragments (i.e., the same CRS), so that both antennas appear to be from the same sector to user equipment (UEs). Thus handovers between offset antennas of the same eNodeB sector are avoided.

## Vertical and Horizontal Offset Configuration

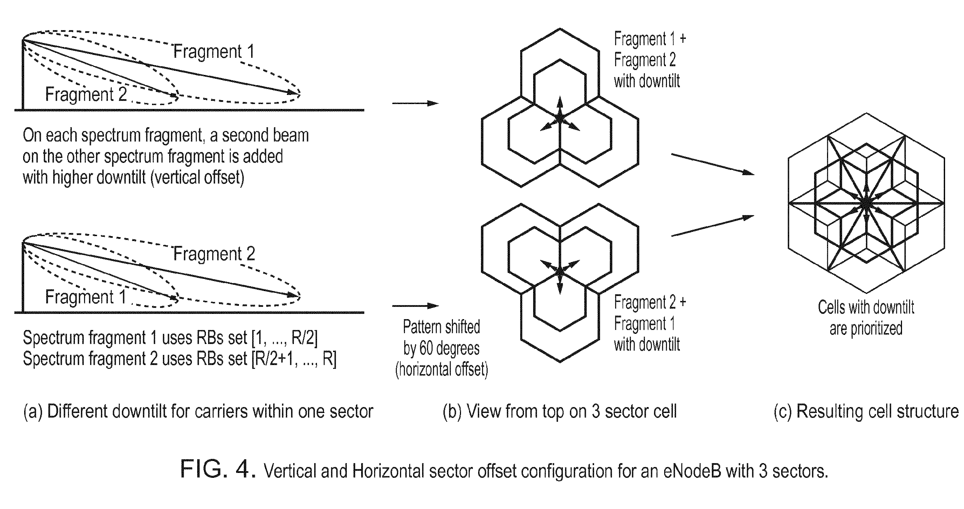

Figures 4a to 4c illustrate schematically some features of an eNodeB configured to use horizontal and vertical sector offset configuration. According to such a configuration the horizontal sector offset configuration can be extended in the vertical dimension to further enhance spectral reuse by adding an additional static beam with higher downtilt pointing in the same direction as each existing antenna in a horizontal-only sector offset configuration. The additional downtilt antenna provides a so called vertical offset. The downtilted antenna uses the complementary spectrum fragment to the normal antenna, as is shown schematically in Figure 4(a).

In the horizontal only sector offset configuration, the normal antenna and its horizontal offset antenna belong to the same sector (transmit the same CRS), and use the entire bandwidth.

In the horizontal and vertical sector offset configuration, it is the normal antenna and the new higher downtilt antenna pointing in the same direction that are considered to belong to the same sector, use the whole bandwidth and transmit the same CRS (i.e., they use the same sector identity and are handled by the same scheduler). Meanwhile, the neighbouring horizontal offset antenna with its new higher downtilt antenna are considered to belong to a different sector. The neighbouring horizontal offset antenna are configured to reuse the whole bandwidth such that neighbouring antennas do not transmit over the same spectrum fragment, as shown in Fig. 2(c).

The horizontal and vertical offset configuration essentially creates a higher downtilt antenna lobe within each existing horizontal offset antenna in the horizontal only sector offset configuration (see Fig. 4(b)). Use of a high downtilt in the vertical antenna allows efficient reuse of the frequency resources of each spectrum fragment locally, while avoiding high interference with sectors of the same eNodeB and neighbouring eNodeBs.

## Overview

Before discussing the embodiments in any more detail, first an overview will be provided. Aspects and embodiments recognise that in a vertical and horizontal offset configuration, a higher downtilt antenna may 'capture' a significantly lower number of users than the 'normal' antenna, since the downtilted antenna will typically have a due reduced coverage area. Aspects and embodiments allow for a load balancing scheme, which targets balancing of the load between two antennas in the same sector. Load balancing according to some aspects and embodiments target roughly achieving the same throughput performance for the worst users associated with each antenna. Note that since the higher downtilt and normal antenna transmit the same CRS, the load balancing technique is not based on classic CRS power tuning, but leverages perceived user signal qualities.

An LTE network also imposes several constraints to a radio resource allocation problem. For instance, typically an LTE network requires that multiple RBs allocated to the same user are assigned with the same modulation and coding scheme (MCS). According to antenna configurations such as those described above in relation to vertical and horizontal offset configuration, schedulers, for example, round robin and proportional schedulers, may be operable to allocate a user RBs handled by different antennas that may have very different channel conditions due to the different orientation/tilt of those antennas. Since the signal quality in one of the antennas may be significantly lower than in other, the scheduling arrangement can compromise the MCS selection and severely affect user performance. Some aspects and embodiments can provide a scheduling technique that serves users with the RBs handled by their best perceived antenna and is able to realize previous load balancing decisions.

It will be understood that whilst a load balancing method is described herein with reference to a 3-sector macrocell antenna configuration with horizontal and vertical offset it can be more broadly applied. Another possible application would, for example, be that of balancing load between two parts of spectrum with different antenna patterns used in small cells. A further application of aspects and embodiments described may, for example, be scheduling across multiple cells where the antennas are not co-located, for example, a remote radio head scenario.

Load balancing

As shown schematically in Figure 4, in a vertical and horizontal antenna offset configuration, a higher downtilt antenna may typically have a reduced coverage compared with a 'normal' antenna. As a result the higher downtilt antenna is likely to be operating to serve a lower number of users than the normal antenna, which can result in load balancing issues. In order to enhance cell edge performance, aspects and embodiments described may be implemented to offload users from a more loaded antenna to the less loaded antenna such that the worst users served by each antenna roughly achieve the same throughput performance.

It will be appreciated that when the number of scheduling realizations is sufficiently large, the performance of a proportional fair scheduler tends to be equivalent to that of a round robin scheduler. Thus it is possible to assume a round robin scheduler in calculations, which thus gives a long-term perspective and the possibility of making fast calculations that can be updated regularly.

In the following, one possible load balancing algorithm is presented.

Let $U = \{U_1, ... U_n ... U_N\}$ be the set of users connected to a sector, where N is the total number of users and $U_n$ is one element of the set.

Let $SINR_n = \{SINR_n^H, SINR_n^L\}$ be the average signal to noise plus interference ratio (SINR) of user $U_n$ in the RBs handled by a higher downtilt antenna and a normal antenna, respectively.

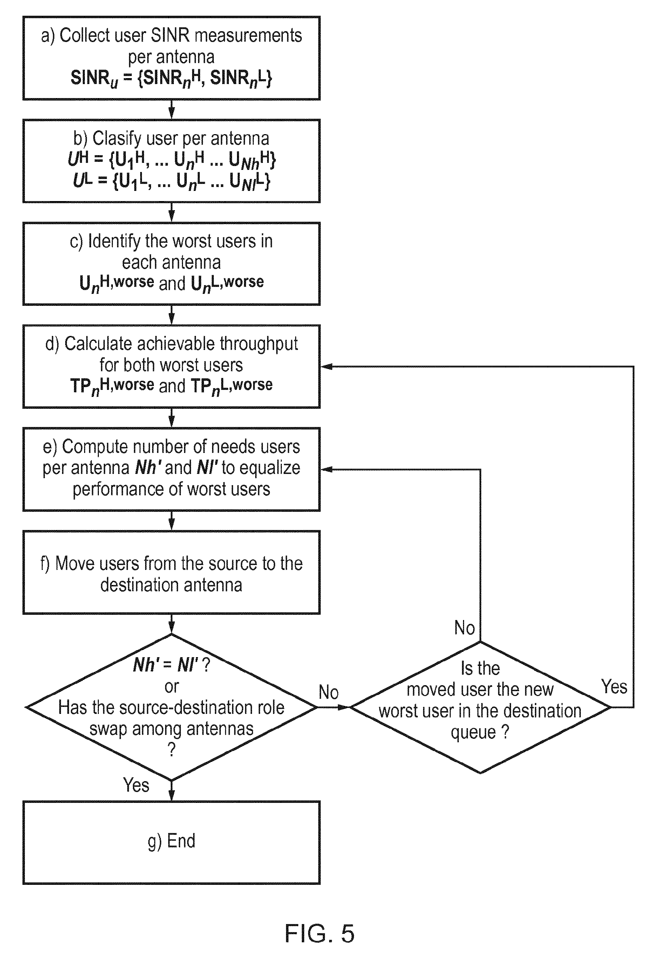

Figure 5 illustrates schematically a load balancing algorithm according to one embodiment. Steps (a) to (g) outlined below correspond to the flowchart boxes of Figure 5.

    a. First, the eNodeB estimates for each user $U_n$ the average user SINR of the RBs handled by the higher downtilt antenna and the normal antenna.

$$SINR_u = \{SINR_n^H, SINR_n^L\}$$

    b. Then, based on these SINR measurements, the eNodeB classifies users as higher downtilt antenna users $U^H = \{U_1^H, ... U_n^H ... U_{Nh}^H\}$ and normal antenna users $U^L = \{U_1^L, ...U_n^L...U_{Nl}^L\}$, where $Nh$ is the total number of users in the higher downtilt antenna (i.e., $SINR_n^H > SINR_n^L$), $Nl$ the total number of users in the normal antenna (i.e., $SINR_n^H \leq SINR_n^L$), and $Nh + Nl = N$. After this classification, the eNodeB 'stores' classified users in a downtilt antenna user queue and a normal antenna user queue respectively.

    c. Thereafter, the eNodeB identifies the worst higher downtilt antenna user $U_n^{H,worse}$ and the worst normal antenna user $U_n^{L,worse}$ based on the SINR measurements in each queue (i.e., $U_n^{H,worse} = \{U_n^{H,worse} \in U^H \mid SINR_n^{H,worse} \leq SINR_n^H\}$ and $U_n^{L,worse} = \{U_n^{L,worse} \in U^L \mid SINR_n^{L,worse} \leq SINR_n^L\}$.

    d. Subsequently, the eNodeB estimates the user throughputs for both worst users $U_n^{H,worse}$ $U_n^{L,worse}$, ie: $TP_n^{H,worse}$ $TP_n^{L,worse}$, as if they would be allocated to all RBs handled by the serving antenna. This computation is straightforward since the eNodeB is aware of the user SINR and the number of RBs handled per antenna (i.e., $TP_n^{H,worse} = f(SINR_n^{H,worse}) K/2$ and $TP^{L,worse} = f(SINR_n^{L,worse}) K/2$, where $f(x)$ is a mapping function that translates RB SINR into RB throughput and $K$ is the total number of RBs).

    e. Once the achievable throughput of both worst users is known and assuming a round robin scheduler, the eNodeB computes how many users there should be in each antenna so that the worst users of each antenna roughly achieve the same throughput performance. This can be easily computed as follows due to the round robin scheduler properties.

$$\begin{cases} \mathrm{Nh}' + \mathrm{Nl}' = \mathrm{N} \\ \mathrm{TP}_n^{\mathrm{H,worse}} + \mathrm{TP}_n^{\mathrm{L,worse}} = 0 \end{cases}$$

$$\downarrow$$

$$\mathrm{Nh}' = \mathrm{N} - \mathrm{Nl}'$$

$$\mathrm{Nl}' = \frac{\mathrm{N}}{1 + \dfrac{\mathrm{TP}_n^{\mathrm{L,worse}}}{\mathrm{TP}_n^{\mathrm{H,worse}}}}$$

where $Nh'$ and $Nl'$ are the total number of users that there should be in the higher downtilt antenna and in the normal antenna, respectively, to achieve load balancing

f. Then, the eNodeB moves users from the higher downtilt antenna user queue (source) to the normal antenna user queue (destination) or vice versa, until the number of desired users in each antenna is achieved. The eNodeB first moves the user with the higher average user SINR in the destination antenna. If the eNodeB moves one user from one queue to the other, and this user becomes the worst user in the new queue, then the eNodeB must re-compute how many users there should be in each antenna according to step e), and then continue with step f).

g. Finally, the algorithm stops when the number of desired users per antenna is achieved, as indicated earlier, or when the eNodeB needs to starts moving users from the higher downtilt antenna to the normal antenna, when in the previous iteration it was moving users in the opposite direction, from the normal antenna to the higher downtilt antenna, or vice versa.

## Scheduling technique

In an LTE network, scheduling decisions are typically taken every subframe. In a traditional scheduler, a time domain scheduler is operable to select S users for scheduling and then pass them on to a frequency domain scheduler, which is operable to determine a RB to user mapping. Limiting the number of users with a time domain scheduler helps to control signaling overhead and the complexity of the frequency domain scheduler. Different polices maybe used in each of the time and frequency domain schedulers to decide which users are scheduled and in which RBs.

According to a round robin scheduler, a user is selected every subframe, i.e., *S=1* in a round robin manner, and the selected user is scheduled across all RBs. Round robin scheduling does not benefit from multi-user diversity.

In a proportional fair scheduler, various metrics may be used in the time and frequency domain schedulers in order to take advantage of multi-user diversity while also providing fairness among users. For example:

The time domain scheduler sorts users according to a TD-PF metric: $M_{PF}(n) = D(n)/R(n)$, where $n$ is the user index, $R(n)$ is the past average throughput of user $U_n$ calculated with an exponential average filter, and $D(n)$ is the wideband throughput of user $U_n$ estimated over the usable bandwidth (i.e., $D(n) = f(SINR_n)\,K$). Thereafter, it passes the *S* users with the highest TD-PF metric to the frequency domain scheduler.

The frequency domain scheduler computes for every passed user $U_n$ and every RB $k \in K$ the FD-PF metric: $N_{PF}(n,k) = SINR_n^{\,k} / \sum_{k=1}^{K} SINR_n^{\,k}$, where $SINR_n^{\,k}$ is the SINR of user $U_n$ in RB k. Thereafter, it schedules in each RB the user with the highest FD-PF metric. In order to further control fairness in case of low number of users, the FD-PF metric is weighted by $W(n) = \max\{1,\, TP^{AIM}/R(n)\}$, where $TP^{AIM}$ is a pre-set targeted user bit rate.

Since LTE requires that multiple RBs allocated to a same user have to be assigned with the same MCS, allocation of a user to RBs with very different channel conditions will compromise the MCS selection and severely affect user performance. This may happen when using a horizontal and vertical sector antenna offset configuration with traditional schedulers, for example, round robin or proportional fair. It is likely that a traditional scheduler would allocate a user to RBs handled by different antennas, those RBs having very different channel conditions due to their different orientation/ tilt. For example, this will always happen in the round robin case since a user is allocated to all RBs, and may also happen in the proportional fair case, when user load is low and user fading conditions are favourable.

Aspects and embodiments described may offer a means to address scheduling issues. According to some embodiments, it may be provided that there are two independent scheduling chains within each eNodeB sector, one of them associated with, for example, a higher downtilt antenna and the other with a 'normal' antenna. Each scheduling chain is operable to take users from different antenna user queues as provided or delineated by a load balancing scheme such as the one described above. In such a scenario each scheduling chain is operable to manage the RBs associated with that antenna. For example, a higher downtilt antenna scheduling chain is operable to take users for time and frequency domain scheduling from a higher downtilt antenna user queue $U^H = \{U_1{}^H, \dots U_n{}^H \dots U_{Nh}{}^{,H}\}$ and operate over, e.g., the first R/2 RBs. Meanwhile, a 'normal' antenna scheduling chain may be operable to take users for time and frequency domain scheduling from the normal antenna user queue $U^L = \{U_1{}^L, ... U_n{}^L ... U_{Nl'}{}^L\}$ and operate over a remaining R/2 RBs.

According to some embodiments, there may be only one scheduling chain, over which the time domain scheduler decides which $S$ users that are passed to the frequency domain scheduler. In a round robin case, it is required that $S=2$ and according to one embodiment, the time domain scheduler is operable to take one user from the higher downtilt user queue and one user from the normal antenna user queue. In a proportional fair case, it is required that $S>2$ and that the time domain scheduler is operable to takes users from both the higher downtilt and the normal antenna queue. According to some embodiments the frequency domain scheduler then acts, according to some embodiments, in accordance with the following constraint: A user that has been classified by a load balancing scheme as described above as a higher downtilt antenna user cannot be scheduled in the RBs associated to the normal antenna and vice versa.

Both scheduling techniques operate to ensure that load balancing decisions can be implemented, and that users are only allocated to the RBs handled by their intended antenna.

Performance comparison

A performance comparison using simulations between a traditional 3 sector setup and a horizontal and vertical sector offset configuration with and without load balancing and enhanced scheduling is shown in Table 1. All results are given for deployments with 1 LTE carrier centered at 2GHZ and with 5MHz bandwidth, and the scenario is illustrated schematically in Figure 2. Results for round robin and proportional fair scheduling are provided.

## TABLE 1:

| Round robin/ Proportional fair | 3 sector | 3 sector + vertical offset | 3 sector + vertical offset + load bal. & scheduling |
|---|---|---|---|
| Sum throughput (average central macrocell sector) | 7.06/9.67Mbps | 10.64/11.88Mbps | 9.72/9.54Mbps |
| User throughput (average) | 58.73/79.91kbps | 178.05/198.48kbps | 162.48/159.35kbps |
| User throughput (5-percentile) | 7.76/22.99kbps | 19.11/43.43kbps | 34.27/67.63kbps |

Compared to a "base line" horizontal and vertical offset configuration, implementation of load balancing and enhanced scheduling results in a 79.33% and a 55.72% improvement of the worst 5th percentile of users' throughputs for the round robin and proportional fair scheduling case, respectively. This is logical since the load balancing technique is devised to enhance cell-edge performance by equalizing the worst user throughput in both antennas.

Extensions:

Aspects and embodiments which, for example, include load balancing and/or enhanced scheduling as described herein include techniques which may, for example, be extended to: eNodeBs with any number of sectors (for example, 6 sector eNodeBs with horizontal and vertical offset configuration, and may be applicable to non-sectorized cells using a dipole array for downtilt) and with any number of higher downtilt antennas; eNodeBs with irregularly pointed sectors and/or with normal and 'higher downtilt' antennas that do not exactly point to the same location but have a significant overlap; eNodeBs where antenna beams are formed dynamically, for example, in a circular antenna array.

Moreover, enhanced scheduling in accordance with some aspects and embodiments which operates to try to ensure that each user is served through the RBs handled by the antenna with which the user has the best channel conditions, may be extended to the control plane, such that Physical Downlink Control Channels (PDCCHs)/ scheduling grants relating to a particular user are allocated to adequate or appropriate RBs, so that inter-cell interference mitigation can be enhanced. The techniques may also be applied to Physical Hybrid ARQ Indicator Channels (PHICHs) - HARQ acknowledgements.

Summary:

In comparison to a 'base line' straight horizontal and vertical offset configuration, aspects and embodiments described may enable load balancing and enhanced scheduling which can result in: better load balancing and use of resources; better MCS selection. According to initial simulations, one implementation may offer: 79.33% improvement of worst 5th percentile of users when using round robin scheduling or a 55.72% improvement of worst 5th percentile of users when using proportional fair scheduling. Aspeacts and embodiments may, however, result in a very slight increase in complexity due to load balancing computations.
Aspects and embodiments may provide a load balancing and scheduling technique suited, for example, to eNodeBs implementing a horizontal and vertical antenna offset configuration. The load balancing method, which is targeted at balancing load between antennas considered by user equipment to support a single sector, can operate to try to maximize cell edge performance. The scheduling technique can realize a derived load balancing decision and ensure that users are scheduled in an appropriate antenna. The scheduling technique described is compatible with both round robin and proportional fair scheduling policies.
A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
The functions of the various elements shown in the Figures, including any functional blocks labelled as "processors" or "logic", maybe provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.
The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

**Claims**

1. A method of scheduling resource across a region of available radio spectrum to a user equipment in a cell supported by a base station of a wireless communication network, said base station being configured to support communication with said user equipment in said cell using a first portion of said region of available radio spectrum using a first antenna or a second portion of said region of available radio spectrum using a second antenna; said method comprising:

   receiving an indication of signal to interference and noise ratio experienced at each user

equipment in the first and second portion of the region of available radio spectrum;

creating an initial association with one of said first or second portion of said region of available radio spectrum for each user equipment based on said received indication;

identifying a worst user of each portion of radio spectrum based on said initial association and said signal to interference and noise ratio;

estimating a throughput associated with each said worst user based on said initial association;

calculating how many users should be associated with each of said first portion and said second portion of said region of available radio spectrum based on said estimated throughput associated with each said worst user such that throughput of a worst user associated with said first portion of said region of available radio spectrum is substantially equivalent to throughput of a worst user associated with said second portion of said region of available radio spectrum; and

adjusting said initial association in accordance with said calculation; and

scheduling resource to said user equipment in said first or second portion of said region of available radio spectrum in accordance with said adjusted association.

2. A method according to claim 1, in which the method comprises transmitting the same cell-specific reference signal in both of said first portion of the region of available radio spectrum using a first antenna and said second portion of the region of available radio spectrum using a second antenna.

3. A method according to claim 1 or claim 2, in which the method comprises configuring said second antenna with respect to said first antenna to support a second region of radio coverage within said cell which is offset to a first region of radio coverage supported by said first antenna.

4. A method according to claim 3, in which the method comprises configuring first and second antenna to be horizontally offset with respect to each other and support respective regions of radio coverage which are offset.

5. A method according to claim 3 or claim 4, in which the method comprises configuring first and second antenna to be vertically offset with respect to each other and support respective regions of radio coverage which are offset.

6. A method according to any preceding claim, in which the method comprises determining said first portion of said region of available radio spectrum to be used by said first antenna and determining said second portion of said region of available radio spectrum to be used by said second antenna.

7. A method according to any preceding claim, wherein said adjusting comprises adjusting by moving user equipment associated with one antenna which have the highest reported signal to noise and interference ratio in relation to another antenna to be associated with said another antenna.

8. A method according to any preceding claim, wherein scheduling resource comprises: maintaining two independent scheduling chains, one for each of said first and second antenna, based on said user equipment association.

9. A method according to any one of claims 1 to 7, wherein scheduling resource comprises: maintaining a single scheduling chain and scheduling user equipment associated with each of said first and second antenna such that user equipment associated with said first portion of the region of available radio spectrum must be scheduled in that portion and user equipment associated with said second portion of the region of available radio spectrum must be scheduled in that portion.

10. A method according to any preceding claim, wherein adjusting said association is performed such that throughput of an average user associated with said first portion of said region of available radio spectrum is substantially equivalent to throughput of an average user associated with said second portion of said region of available radio spectrum.

11. A method according to any preceding claim, wherein adjusting said association is performed such that throughput of the median user associated with said first portion of said region of available radio spectrum is substantially equivalent to throughput of the median user associated with said second portion of said region of available radio spectrum.

12. A computer program product operable, when executed on a computer, to perform the method of any one of claims 1 to 11.

**13.** A scheduling control unit operable to schedule resource across a region of available radio spectrum to a user equipment in a cell supported by a base station of a wireless communication network, said base station being configured to support communication with said user equipment in said cell using a first portion of said region of available radio spectrum using a first antenna or a second portion of said region of available radio spectrum using a second antenna; said scheduling control unit comprising:

reception logic operable to receive an indication of signal to interference and noise ratio experienced at each user equipment in the first and second portion of the region of available radio spectrum; association logic operable to:

create an initial association with one of said first or second portion of said region of available radio spectrum for each user equipment based on said received indication;
identify a worst user of each portion of radio spectrum based on said initial association and said signal to interference and noise ratio;
estimate a throughput associated with each said worst user based on said initial association;
calculate how many users should be associated with each of said first portion and said second portion of said region of available radio spectrum based on said estimated throughput associated with each said worst user such that throughput of a worst user associated with said first portion of said region of available radio spectrum is substantially equivalent to throughput of a worst user associated with said second portion of said region of available radio spectrum; and
adjust said initial association in accordance with said calculation; and scheduling logic operable to schedule resource to said user equipment in said first or second portion of said region of available radio spectrum in accordance with said adjusted association.

**Patentansprüche**

**1.** Verfahren zum Planen einer Ressource über einen Bereich eines verfügbaren Funkspektrums für ein Teilnehmergerät in einer Zelle, die von einer Basisstation eines drahtlosen Kommunikationsnetzwerks unterstützt wird, wobei besagte Basisstation ausgelegt ist zum Unterstützen einer Kommunikation mit besagtem Teilnehmergerät in besagter Zelle unter Verwendung eines ersten Abschnitts des besagten Bereichs eines verfügbaren Frunkspektrums unter Verwendung einer ersten Antenne oder eines zweiten Abschnitts des besagten Bereichs eines verfügbaren Funkspektrums unter Verwendung einer zweiten Antenne; wobei besagtes Verfahren Folgendes umfasst:

Empfangen einer Angabe eines Signal-Störungs-und-Rausch-Verhältnisses, das man an jedem Teilnehmergerät im ersten und zweiten Abschnitt des Bereichs eines verfügbaren Funkspektrums wahrnimmt;
Erstellen einer Erstzuordnung zu einem des besagten ersten oder zweiten Abschnitts des besagten Bereichs eines verfügbaren Funkspektrums für jedes Teilnehmergerät basierend auf der besagten empfangenen Angabe;
Identifizieren eines schlechtesten Benutzers von jedem Abschnitt eines Funkspektrums basierend auf besagter Erstzuordnung und besagtem Signal-Störungs-und-Rausch-Verhältnis;
Schätzen eines Durchsatzes, der jedem besagten schlechtesten Benutzer zugeordnet ist, basierend auf besagter Erstzuordnung;
Berechnen, wie viele Benutzer jedem von besagtem ersten Abschnitt und besagtem zweiten Abschnitt des besagten Bereichs eines verfügbaren Funkspektrums basierend auf dem besagten geschätzten Durchsatz zugeordnet werden sollen, der jedem besagten schlechtesten Benutzer zugeordnet ist, so dass ein Durchsatz eines schlechtesten Benutzers, der besagtem ersten Abschnitt des besagten Bereichs eines verfügbaren Funkspektrums zugeordnet ist, im Wesentlichen gleich ist wie ein Durchsatz eines schlechtesten Benutzers, der besagtem zweiten Abschnitt des besagten Bereichs eines verfügbaren Funkspektrums zugeordnet ist; und
Anpassen besagter Erstzuordnung in Übereinstimmung mit besagter Berechnung; und
Planen einer Ressource für besagtes Teilnehmergerät im besagten ersten oder zweiten Abschnitt des besagten Bereichs eines verfügbaren Funkspektrums in Übereinstimmung mit der besagten angepassten Zuordnung.

**2.** Verfahren nach Anspruch 1, wobei das Verfahren das Senden des gleichen zellenspezifischen Referenzsignals in beide des besagten ersten Abschnitts des Bereichs eines verfügbaren Funkspektrums unter Verwendung einer ersten Antenne und besagten zweiten Abschnitts des Bereichs eines verfügbaren Funkspektrums unter Verwendung einer zweiten Antenne umfasst.

**3.** Verfahren nach Anspruch 1 oder Anspruch 2, wobei das Verfahren das Konfigurieren der besagten zweiten Antenne in Bezug auf besagte erste Antenne umfasst, um einen zweiten Bereich einer Funkabdeckung innerhalb der besagten Zelle zu unterstützen, der versetzt ist zu einem ersten Bereich einer Funkabdeckung, der von der besagten ersten Antenne unterstützt wird.

4. Verfahren nach Anspruch 3, wobei das Verfahren das Konfigurieren einer ersten und zweiten Antenne umfasst, um zueinander horizontal versetzt zu sein und jeweilige Bereiche einer Funkabdeckung zu unterstützen, die versetzt sind.

5. Verfahren nach Anspruch 3 oder Anspruch 4, wobei das Verfahren das Konfigurieren einer ersten und zweiten Antenne umfasst, um zueinander vertikal versetzt zu sein und jeweilige Bereiche einer Funkabdeckung zu unterstützen, die versetzt sind.

6. Verfahren nach einem beliebigen vorstehenden Anspruch, wobei das Verfahren das Bestimmen des besagten ersten Abschnitts des besagten Bereichs eines verfügbaren Funkspektrums umfasst, der von der besagten ersten Antenne zu verwenden ist, und das Bestimmen des besagten zweiten Abschnitts des besagten Bereichs eines verfügbaren Funkspektrums, der von der besagten zweiten Antenne zu verwenden ist.

7. Verfahren nach einem beliebigen vorstehenden Anspruch, wobei besagtes Anpassen das Anpassen durch Bewegen eines Teilnehmergeräts umfasst, das einer Antenne zugeordnet ist, die das höchste gemeldete Signal-Rausch-und-Störungs-Verhältnis in Bezug auf eine andere Antenne aufweist, die der besagten anderen Antenne zuzuordnen ist.

8. Verfahren nach einem beliebigen vorstehenden Anspruch, wobei das Planen einer Ressource Folgendes umfasst: Aufrechterhalten von zwei unabhängigen Planungsketten, jeweils für jede der besagten ersten und zweiten Antenne, basierend auf besagter Teilnehmergerätzuordnung.

9. Verfahren nach einem beliebigen der Ansprüche 1 bis 7, wobei das Planen einer Ressource Folgendes umfasst: Aufrechterhalten einer einzelnen Planungskette und Planen eines Teilnehmergeräts, das jeder der besagten ersten und zweiten Antenne zugeordnet ist, so dass ein Teilnehmergerät, das dem besagten ersten Abschnitt des Bereichs eines verfügbaren Funkspektrums zugeordnet ist, in jenem Abschnitt geplant werden muss, und ein Teilnehmergerät, das dem besagten zweiten Abschnitt des Bereichs eines verfügbaren Funkspektrums zugeordnet ist, in jenem Abschnitt geplant werden muss.

10. Verfahren nach einem beliebigen vorstehenden Anspruch, wobei das Anpassen der besagten Zuordnung so durchgeführt wird, dass ein Durchsatz eines Durchschnittsbenutzers, der dem besagten ersten Abschnitt des besagten Bereichs eines verfügbaren Funkspektrums zugeordnet ist, im Wesentlichen gleich ist wie ein Durchsatz eines Durchschnittsbenutzers, der dem besagten zweiten Abschnitt des besagten Bereichs eines verfügbaren Funkspektrums zugeordnet ist.

11. Verfahren nach einem beliebigen vorstehenden Anspruch, wobei das Anpassen der besagten Zuordnung so durchgeführt wird, dass ein Durchsatz des mittleren Benutzers, der dem besagten ersten Abschnitt des besagten Bereichs eines verfügbaren Funkspektrums zugeordnet ist, im Wesentlichen gleich ist wie ein Durchsatz des mittleren Benutzers, der dem besagten zweiten Abschnitt des besagten Bereichs eines verfügbaren Funkspektrums zugeordnet ist.

12. Computerprogrammprodukt, das bei Ausführung auf einem Computer betriebsfähig ist, das Verfahren nach einem beliebigen der Ansprüche 1 bis 11 durchzuführen.

13. Planungssteuerungseinheit, die betriebsfähig ist zum Planen einer Ressource über einen Bereich eines verfügbaren Funkspektrums für ein Teilnehmergerät in einer Zelle, die von einer Basisstation eines drahtlosen Kommunikationsnetzwerks unterstützt wird, wobei besagte Basisstation ausgelegt ist zum Unterstützen einer Kommunikation mit besagtem Teilnehmergerät in besagter Zelle unter Verwendung eines ersten Abschnitts des besagten Bereichs eines verfügbaren Funkspektrums unter Verwendung einer ersten Antenne oder eines zweiten Abschnitts des besagten Bereichs eines verfügbaren Funkspektrums unter Verwendung einer zweiten Antenne; wobei besagte Planungssteuerungseinheit Folgendes umfasst:

Empfangslogik, die betriebsfähig ist zum Empfangen einer Angabe eines Signal-Störungs- und-Rausch-Verhältnisses, das man an jedem Teilnehmergerät im ersten und zweiten Abschnitt des Bereichs eines verfügbaren Funkspektrums wahrnimmt;

Zuordnungslogik, die betriebsfähig ist zum:

Erstellen einer Erstzuordnung zu einem des besagten ersten oder zweiten Abschnitts des besagten Bereichs eines verfügbaren Funkspektrums für jedes Teilnehmergerät basierend auf der besagten empfangenen Angabe;

Identifizieren eines schlechtesten Benutzers von jedem Abschnitt eines Funkspektrums basierend auf besagter Erstzuordnung und besagtem Signal-Störungs- und-Rausch-Verhältnis;

Schätzen eines Durchsatzes, der jedem besagten schlechtesten Benutzer zugeordnet ist, basierend auf besagter Erstzuordnung;

Berechnen, wie viele Benutzer jedem von besagtem ersten Abschnitt und besagtem zweiten Abschnitt des besagten Bereichs eines verfügbaren Funkspekfirums basierend auf dem besagten geschätzten Durchsatz zugeordnet werden sollen, der jedem besagten schlechtesten Benutzer zugeordnet ist, so dass ein Durchsatz eines schlechtesten Benutzers, der besagtem ersten Abschnitt des besagten Bereichs eines verfügbaren Funkspektrums zugeordnet ist, im Wesentlichen gleich ist wie ein Durchsatz eines schlechtesten Benutzers, der besagtem zweiten Abschnitt des besagten Bereichs eines verfügbaren Funkspektrums zugeordnet ist; und

Anpassen besagter Erstzuordnung in Übereinstimmung mit besagter Berechnung; und

Planungslogik, die betriebsfähig ist zum Planen einer Ressource für besagtes Teilnehmergerät im besagten ersten oder zweiten Abschnitt des besagten Bereichs eines verfügbaren Funkspektrums in Übereinstimmung mit der besagten angepassten Zuordnung.

## Revendications

1. Procédé de planification de ressource dans une région du spectre radio disponible pour un équipement utilisateur d'une cellule pris en charge par une station de base d'un réseau de communication sans fil, ladite station de base étant configurée pour prendre en charge les communications avec ledit équipement utilisateur dans ladite cellule en utilisant une première partie de ladite région du spectre radio disponible au moyen d'une première antenne ou une deuxième partie de ladite région du spectre radio disponible au moyen d'une deuxième antenne ; ledit procédé comprenant les étapes suivantes :

recevoir une indication du rapport signal sur interférences et bruit rencontré au niveau de chaque équipement utilisateur dans la première et la deuxième partie de la région du spectre radio disponible ;

créer une association initiale avec l'une desdites première ou deuxième partie de ladite région du spectre radio disponible pour chaque équipement utilisateur sur la base desdites indications reçues ;

identifier un utilisateur le plus défavorisé dans chaque partie du spectre radio sur la base de ladite association initiale et dudit rapport signal sur interférences et bruit ;

estimer un débit associé à chacun desdits utilisateurs les plus défavorisés sur la base de ladite association initiale ;

calculer combien d'utilisateurs doivent être associés à chacune desdites première et deuxième parties de ladite région du spectre radio disponible sur la base dudit débit estimé associé à chacun desdits utilisateurs les plus défavorisés de sorte que le débit d'un utilisateur le plus défavorisé associé à ladite première partie de ladite région du spectre radio disponible soit substantiellement équivalent au débit d'un utilisateur le plus défavorisé associé à ladite deuxième partie de ladite région du spectre radio disponible ; et

ajuster ladite association initiale en fonction dudit calcul ; et

planifier les ressources pour ledit équipement utilisateur dans ladite première ou deuxième partie de ladite région du spectre radio disponible en fonction de ladite association ajustée.

2. Procédé selon la revendication 1, comprenant la transmission du même signal de référence spécifique à la cellule à la fois dans ladite première partie de la région du spectre radio disponible au moyen d'une première antenne et dans ladite deuxième partie de la région du spectre radio disponible au moyen d'une deuxième antenne.

3. Procédé selon les revendications 1 ou 2, comprenant la configuration de ladite deuxième antenne par rapport à ladite première antenne afin de prendre en charge une deuxième région de couverture radio dans ladite cellule qui soit décalée par rapport à une première région de couverture radio prise en charge par ladite première antenne.

4. Procédé selon la revendication 3, comprenant l'étape de configuration des première et deuxième antennes de sorte qu'elles présentent un décalage horizontal l'une par rapport à l'autre et prennent en charge leurs régions de couverture radio respectives qui sont décalées.

5. Procédé selon les revendications 3 ou 4, comprenant l'étape de configuration des première et deuxième antennes de sorte qu'elles présentent un décalage vertical l'une par rapport à l'autre et prennent en charge leurs régions de couverture radio respectives qui sont décalées.

6. Procédé selon l'une quelconque des revendications précédentes, comprenant l'étape de détermination de ladite première partie de ladite région du spectre radio disponible à utiliser par ladite première antenne et l'étape de détermination de ladite deuxième partie de ladite région du spectre radio disponible à utiliser par ladite deuxième antenne.

7. Procédé selon l'une quelconque des revendications précédentes, dans lequel ledit ajustement comprend l'étape d'ajuster en le déplaçant un équipement utilisateur associé à une antenne qui a le rapport signal sur interférences et bruit signalé le plus élevé par rapport à une autre antenne pour l'associer à ladite autre antenne.

8. Procédé selon l'une quelconque des revendications précédentes, dans lequel la planification de ressources comprend l'étape suivante : maintenir deux chaînes de planification indépendantes, une pour chacune desdites première et deuxième antennes, sur la base de ladite association d'équipement utilisateur.

9. Procédé selon l'une quelconque des revendications 1 à 7, dans lequel la planification de ressources comprend l'étape suivante : maintenir une chaîne de planification unique et planifier un équipement utilisateur associé à chacune desdites première et deuxième antennes de sorte que l'équipement utilisateur associé à ladite première partie de la région du spectre radio disponible soit obligatoirement planifié dans cette partie et l'équipement utilisateur associé à ladite deuxième partie de la région du spectre radio disponible soit obligatoirement planifié dans cette partie.

10. Procédé selon l'une quelconque des revendications précédentes, dans lequel l'ajustement de ladite association est réalisé de sorte que le débit d'un utilisateur moyen associé à ladite première partie de ladite région du spectre radio disponible soit substantiellement équivalent au débit d'un utilisateur moyen associé à ladite deuxième partie de ladite région du spectre radio disponible.

11. Procédé selon l'une quelconque des revendications précédentes, dans lequel l'ajustement de ladite association est réalisé de sorte que le débit de l'utilisateur médian associé à ladite première partie de ladite région du spectre radio disponible soit substantiellement équivalent au débit de l'utilisateur médian associé à ladite deuxième partie de ladite région du spectre radio disponible.

12. Produit de programme informatique permettant, lorsqu'il est exécuté sur un ordinateur, de réaliser le procédé selon l'une quelconque des revendications 1 à 11.

13. Unité de commande de planification permettant de planifier une ressource dans une région du spectre radio disponible pour un équipement utilisateur d'une cellule pris en charge par une station de base d'un réseau de communication sans fil, ladite station de base étant configurée pour prendre en charge les communications avec ledit équipement utilisateur dans ladite cellule en utilisant une première partie de ladite région du spectre radio disponible au moyen d'une première antenne ou une deuxième partie de ladite région du spectre radio disponible au moyen d'une deuxième antenne ; ladite unité de commande de planification comprenant :

une logique de réception permettant de recevoir une indication du rapport signal sur interférences et bruit rencontré au niveau de chaque équipement utilisateur dans la première et la deuxième parties de la région du spectre radio disponible ;
une logique d'association permettant :

de créer une association initiale avec l'une desdites première ou deuxième parties de ladite région du spectre radio disponible pour chaque équipement utilisateur sur la base de ladite indication reçue ;
d'identifier un utilisateur le plus défavorisé dans chaque partie du spectre radio sur la base de ladite association initiale et dudit rapport signal sur interférences et bruit ;
d'estimer un débit associé à chacun desdits utilisateurs les plus défavorisés sur la base de ladite association initiale ;
de calculer combien d'utilisateurs doivent être associés à chacune desdites première et deuxième parties de ladite région du spectre radio disponible sur la base dudit débit estimé associé à chacun desdits utilisateurs les plus défavorisés de sorte que le débit d'un utilisateur le plus défavorisé associé à ladite première partie de ladite région du spectre radio disponible soit substantieliernent équivalent au débit d'un utilisateur le plus défavorisé associé à ladite deuxième partie de ladite région du spectre radio disponible ; et d'ajuster ladite association initiale en fonction dudit calcul ; et

une logique de planification permettant de planifier une ressource pour ledit équipement utilisateur dans ladite première ou deuxième partie de ladite région du spectre radio disponible en fonction de ladite association ajustée.

(a) 3 sector traditional conf. SINR distribution     (b) 3 sector offset conf. SINR distribution     (c) 3 sector offset conf. spectrum coverage

FIG. 1. SINR distribution and spectrum coverage for a 3 sector eNodeB case with and without horizontal sector offset configuration.

(a) 3 sector traditional conf. SINR distribution     (b) 3 sector offset + vBF conf. SINR distribution     (c) 3 sector offset + vBF conf. spectrum coverage

FIG. 2. SINR distribution and spectrum coverage for a 3 sector eNodeB case with and without horizontal and vertical sector offset configuration.

EP 2 816 854 B1

Traditional eNodeB
Using RBs set [1, ..., R/2]

Poor regions between
sectors and celledge
do not overlap

Pattern shifted by 60 degrees
Using RBs set [R/2+1, ..., R]

New cell boundaries

(a) Sector offset eNodeB configuration

Antenna 1     Antenna 2

Radome

Digital

$T_{subframe}$=1 ms

One RB

50

25

Frequency

1 2

Time

1     2          9    10

Antenna 2 transmits cell-specific
RSs and data in this region

Antenna 2

Total bandwidth

Antenna 1

Antenna 1 transmits cell-specific
RSs and data in this region

(b) Sector offset radome and new
cell-specific reference signal configuration

FIG. 3. Horizontal sector offset configuration for an eNodeB with 3 sectors.

EP 2 816 854 B1

On each spectrum fragment, a second beam on the other spectrum fragment is added with higher downtilt (vertical offset)

Spectrum fragment 1 uses RBs set [1, ..., R/2]
Spectrum fragment 2 uses RBs set [R/2+1, ..., R]

(a) Different downtilt for carriers within one sector

Fragment 1 +
Fragment 2
with downtilt

Pattern shifted
by 60 degrees
(horizontal offset)

Fragment 2 +
Fragment 1
with downtilt

(b) View from top on 3 sector cell

Cells with downtilt
are prioritized

(c) Resulting cell structure

FIG. 4. Vertical and Horizontal sector offset configuration for an eNodeB with 3 sectors.

a) Collect user SINR measurements
per antenna
$SINR_U = \{SINR_n H, SINR_n L\}$

b) Clasify user per antenna
$U^H = \{U_1 H, ... U_n H ... U_{Nh} H\}$
$U^L = \{U_1 L, ... U_n L ... U_{Nl} L\}$

c) Identify the worst users in
each antenna
$U_n H,worse$ and $U_n L,worse$

d) Calculate achievable throughput
for both worst users
$TP_n H,worse$ and $TP_n L,worse$

e) Compute number of needs users
per antenna $Nh'$ and $Nl'$ to equalize
performance of worst users

f) Move users from the source to the
destination antenna

$Nh' = Nl'$ ?
or
Has the source-destination role
swap among antennas
?

No

Is the
moved user the new
worst user in the destination
queue ?

No

Yes

Yes

g) End

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006012537 A1